# EUROPEAN PATENT APPLICATION

(11) **EP 0 900 515 A2**
(43) Date of publication of application: **10.03.1999**
(21) Application number: 98202967.0
(22) Date of filing: 04.09.1998
(51) Int. Cl.: A01B 51/04

(54) **Implement carrier**

(30) Priority: 04.09.1997 NL 1006945
(71) Applicant: Mulder, Arend, 9337 PE Westervelde (NL)
(72) Inventor: Mulder, Arend, 9337 PE Westervelde (NL)
(74) Representative: Smulders, Theodorus A.H.J., Ir.

(57) **Abstract**

An implement carrier for hitching a plurality of agricultural implements (23, 24) behind a tractor (8) has a frame (1) which is supported by wheels and which can be hitched behind a tractor (8). The frame (1) comprises a plurality of sets of hitching points (21, 22) for connecting agricultural implements (23, 24) in the same manner as when they were hitched directly to a tractor (8), and a transmission casing (25) to which the power take-off (26) of the tractor (8) can be connected and from which the drive passes to each of the hitching locations (A and B) on the frame (1) adjacent the respective sets of hitching points (21, 22), to enable from there a coupling to the drive means in the relevant agricultural implements (23, 24).

## Description

The present invention relates to an implement carrier for hitching a plurality of agricultural implements thereto.

It is known to hitch a plurality of agricultural implements to a tractor; the agricultural implements can be hitched in front of the tractor as well as behind it via the conventional lifting-arm constructions at the front and rear of the tractor. It is also possible to hitch for instance one agricultural implement behind the tractor and two agricultural implements in front of the tractor, on either side thereof; see EP-A-0 664 948. The agricultural implements to be hitched can be tillage machines, such a rotor head harrows, possibly in combination with a sowing machine, and further mowing machines, haying implements, such as hay tedders and swath rakes, etc. In particular in the case where the agricultural implements are mounted on either side of the tractor, it is known to use an intermediate frame especially adjusted thereto, and the whole forms a combination of agricultural implements that is to be regarded as one whole and is also marketed as such. However, when a farmer already has at his disposal a plurality of agricultural implements of a particular type, for instance a plurality of haying implements, possibly even having different working widths, hitching a plurality of these implements to the tractor is a problem.

The object of the invention is to solve this problem at least to a substantial extent and to enable a plurality of agricultural implements, of the same or different kinds and of different types or brands, to be readily and rapidly hitched to the tractor.

In accordance with the invention, this object is realized by an implement carrier for hitching a plurality of agricultural implements behind a tractor, which implement carrier has a frame which is supported by wheels and which can be hitched behind a tractor, the frame comprising a plurality of sets of hitching points for connecting agricultural implements in the same manner as when they were hitched directly to a tractor, and a transmission casing to which the power take-off of the tractor can be connected and from which the drive passes to each of the hitching locations on the frame adjacent the respective sets of hitching points, to enable from there a coupling to the drive means in the relevant agricultural implements.

In other words, the invention provides a universal implement carrier which can be pulled by a tractor and to which a plurality of agricultural implements can be connected by means of a plurality of sets of hitching points corresponding to those of the power lift of a tractor. Each set of hitching points is preferably formed by three hitching points in a configuration as is known per se for tractors. As particularly the distance in between the lowermost hitching points may fairly often differ for the various machines to be hitched, it is favorable when one or more hitching points on the frame are adjustable relative to this frame.

When a plurality of agricultural implements are coupled in this manner behind the tractor, with the interposition of the implement carrier, the width of the entire machine, i.e. the implement carrier with the agricultural implements coupled thereto, will be too great for over-the-road transport. For this reason, according to the invention, the frame comprises a fixed intermediate frame which is supported by wheels and can be coupled behind a tractor, and at least one supporting arm pivotable relative to the intermediate frame, both the intermediate frame and the supporting arm comprising a set of hitching points for connecting agricultural implements. In particular, a supporting arm can be arranged on either side of the intermediate frame for pivoting relative to that intermediate frame, and the two supporting arms can comprise a set of hitching points for connecting agricultural implements. In the transporting position of the machine, the two pivotable supporting arms, with or without the agricultural implements coupled thereto, can then be folded in.

For bringing the machine, formed by the implement carrier and the agricultural implements hitched thereto, into the transporting position or for bringing the agricultural implements into a position in which the working width of one agricultural implement connects to that of the other agricultural implement, the angle at which a supporting arm is arranged relative to the direction of travel is settable. If a haying implement having six rake wheels is mounted on the intermediate frame, it makes a difference whether one of the supporting arms mounts a haying implement having for instance four or two rake wheels. The angle mentioned should be chosen such that the working widths of the two hitched agricultural implements connect to each other. If a supporting arm mounts a haying implement having two rake wheels, this angle will be more acute than in the case where a haying implement having four rake wheels is mounted thereon.

For this reason, in a more concrete embodiment, a hydraulic cylinder is present for each supporting arm, for bringing a relevant supporting arm, with or without an agricultural implement coupled thereto, rearwards relative to the direction of travel.

Further, for each supporting arm, a hydraulic cylinder may be present for adjusting the length of this supporting arm for setting the working width of the machine, formed by the implement carrier and the agricultural implements hitched thereto, and/or for bringing the machine into the transporting position.

An alternative to this construction consists in that each of the supporting arms includes a hinge and that for each supporting arm a hydraulic cylinder is present for bringing the supporting arm, with or without an agricultural implement coupled thereto, into the transporting position, utilizing this hinge. In particular in this case, it is favorable when the angle at which the supporting arms are arranged relative to the direction of travel, is settable.

In particular for driving the machine backwards on the plot to be tilled and for tilling the headland also in the corners, it is favorable that for each supporting arm a hydraulic cylinder is present for pivoting this supporting arm with an agricultural implement hitched thereto upwards.

Although the hydraulic cylinders may act against mechanical means which keep the supporting arms in a specific position, for simplicity's sake it is preferred that one or more hydraulic cylinders be double-acting. The hydraulic cylinders can be connected, via a control valve block arranged on the implement carrier, to the hydraulic system of the tractor and be manually or electrically operated from the tractor.

Since it must be possible to hitch agricultural implements to or adjacent the ends of the supporting arms, it is important that each of the pivotable supporting arms be provided with a height-adjustable wheel pair whose wheels are preferably freely pivotable and by means of which the supporting arms can be supported upon the ground. Moreover, it is favorable when the implement carrier then also comprises a supporting frame to which the supporting arms are connected, which supporting frame is pivotally connected to the intermediate frame for rotation about a substantially horizontal axis extending transversely to the direction of travel. In particular due to the combination of this pivotal axis with the height-adjustable wheel pair, the working depth of the agricultural implements can be determined in a practical manner.

For the same reason, a wheel pair is mounted on or adjacent the end of the frame opposite the end of the frame that can be hitched to a tractor, the height of which wheel pair can be adjusted by a hydraulic cylinder, while the frame is rotatable about a substantially horizontal axis formed by the hitching points of the implement carrier to a tractor.

When the implement carrier further comprises a transverse beam which can be coupled to a tractor and to which said frame is connected for pivoting about a substantially vertical axis, it becomes possible, by means of a control rod mechanism connected to this transverse beam, to control the wheels of this wheel pair such that they can follow the movement of the tractor.

The invention will presently be specified with reference to the accompanying drawings, wherein:
Fig. 1 schematically shows the implement carrier according to the invention, having three haying implements coupled thereto;
Fig. 2 is a schematic, partial front view of the implement carrier of Fig. 1;
Fig. 3 is a schematic side elevation of the intermediate frame of the implement carrier of Fig. 1;
Fig. 4 shows an example of an arrangement of the implement carrier according to the invention having two haying implements hitched thereto in the working position;
Fig. 5 shows the same arrangement as in Fig. 4, in which, however, the machine is depicted in the transporting position;
Fig. 6 shows an example of an arrangement of the implement carrier according to the invention having three haying implements hitched thereto in the working position;
Fig. 7 shows the same arrangement as in Fig. 6, in which, however, the machine is depicted in the transporting position; and
Fig. 8 shows a further example of an implement carrier in the transporting position; while
Fig. 9 shows this last implement carrier in the working position.

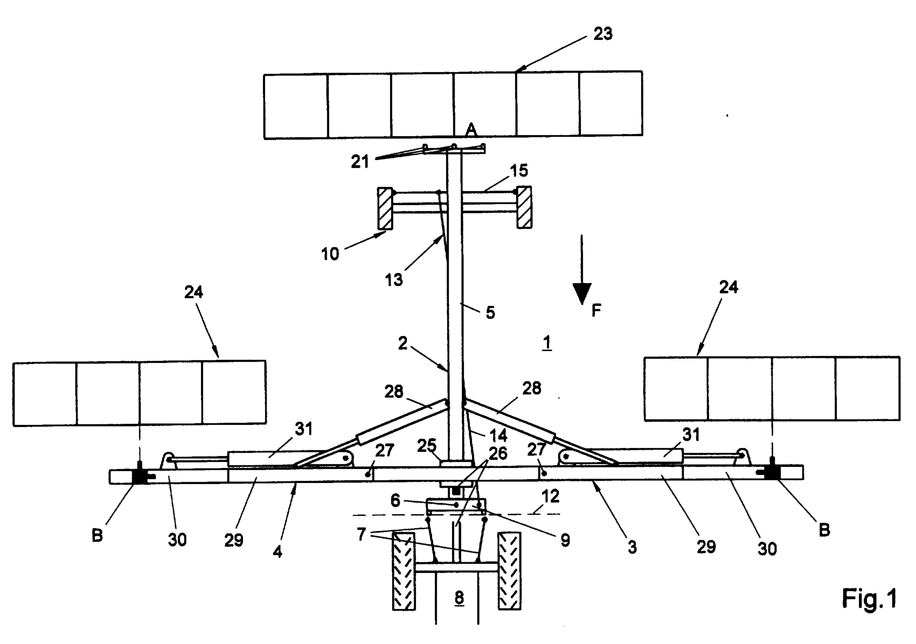

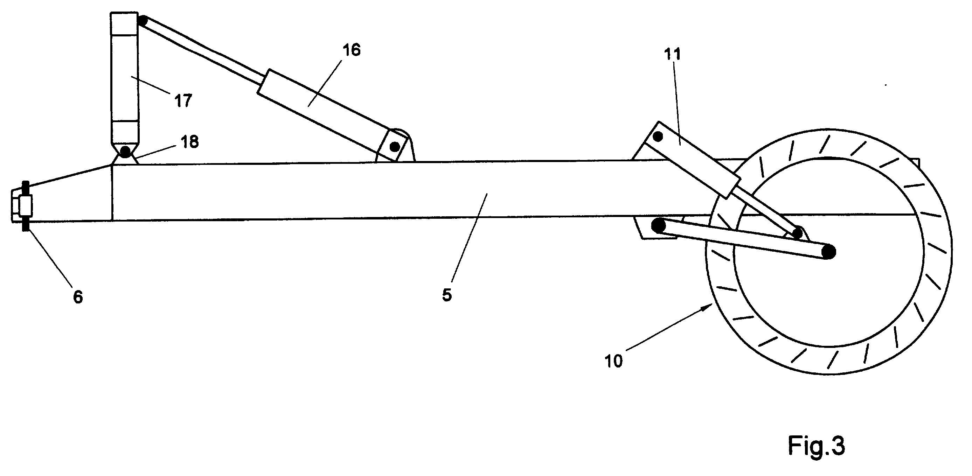

The implement carrier shown in Figs. 1-3 comprises a frame 1 having an intermediate frame 2 and supporting arms 3 and 4 pivotally connected thereto. The intermediate frame 2 is formed by a rearwardly extending supporting beam 5 which is connected to a transverse beam 9 that can be hitched to the lowermost lifting arms 7 of a tractor 8 for pivoting about an upwardly extending pivotal axis 6. Adjacent the rear end, the supporting beam 5 is supported upon the ground via a wheel pair 10 which is height-adjustable by means of a hydraulic cylinder 11 (Fig. 3). This cylinder may be double-acting, although a single-acting cylinder has good utility; as it is, the supporting beam 5 can by its weight move down relative to the wheel pair 10. Rather than by means of the hydraulic cylinder 11, the agricultural implement coupled behind the intermediate frame could be hydraulically raised by means of the three-point coupling, as it is referred to hereinbelow. During height-adjustment of the wheel pair 10, the supporting beam 5 can pivot about a pivotal axis 12 formed by the hitching points of the transverse beam 9 to the lowermost lifting arms 7 of the tractor 8. In the present embodiment, the implement carrier is provided with a steering rod mechanism 13 comprising a steering rod 14 which is on the one hand pivotally connected to the transverse beam 9 and on the other hand pivotally connected to the transverse steering rod 15 forming part of the pivot mechanism (not further shown) for the wheels of the wheel pair 10, such that these wheels can follow the movement of the tractor 8.

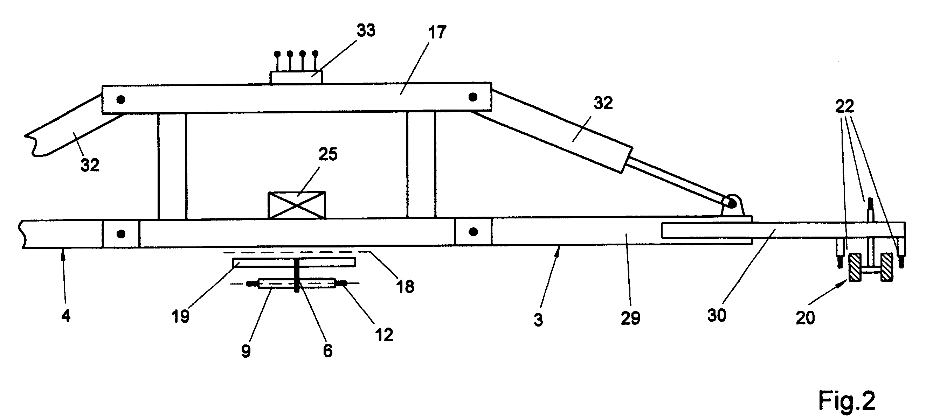

By means of a preferably double-acting hydraulic cylinder 16, a supporting frame 17 (Figs. 2 and 3) is mounted for pivoting about a substantially horizontal pivotal axis 18 on a transverse beam 19 that is fixedly connected to the supporting beam 5. The supporting arms 3 and 4 are pivotally connected to this supporting frame 17. Adjacent their ends, these supporting arms 3 and 4 comprise a height-adjustable wheel pair 20 (Fig. 2) whose wheels can pivot freely. Located at the end of the supporting beam 5 as well as adjacent the ends of the supporting arms 3 and 4 is a hitching frame having a set of three hitching points 21 and 22, via which three agricultural implements can be hitched to the implement carrier, in the same manner as when they were hitched directly to the tractor 8. The lowermost hitching points are hydraulically operable, while the relevant agricultural implements are connected to the uppermost hitching points via a top rod. The hitched agricultural implements can then also be raised in the same manner as if they were coupled directly to the tractor, in particular for bringing them into the transporting position. In Fig. 1, three haying implements 23 and 24 are hitched in this manner to the implement carrier, viz. a haying implement 23 having six rake wheels on the rear of the supporting arm 5 and a haying implement 24 having four rake wheels on each of the supporting arms 3 and 4. The haying implements 23, 24 are indicated only schematically.

Provided on the supporting frame 17 is a transmission casing 25, to which the power take-off 26 of a tractor 8 can be connected and from which the drive (not shown in the Figures) passes to each of the hitching locations A and B at the end of the supporting beam 5 and on the supporting arms 3 and 4 adjacent the respective sets of hitching points 21, 22, to enable from there a coupling to the drive means in the relevant haying implements 23 and 24. For the sake of the universal character of the implement carrier according to the invention, such transmission casing with drive means is necessary, even if use were made of hydraulic motors mounted on the implement carrier for driving the hitched agricultural implements. In fact, the hydraulic pump of such hydraulic motors could again be driven from the power take-off.

In pivot points 27, the supporting arms 3 and 4 can be moved rearwards relative to the direction of travel F, into the transporting position. To enable this movement, preferably double-acting hydraulic cylinders 28 are pivotally arranged between the supporting beam 5 and the supporting arms 3 and 4.

In Fig. 1, the supporting arms 3 and 4 are arranged in the working position transverse to the direction of travel. As appears from the Figure, the last rake wheels of the haying implement 23 connect, as far as their action is concerned, to the inner rake wheels of the respective haying implements 24. When this is not the case, it is possible to extend or shorten the supporting arms 3 and 4. For that reason, the supporting arms 3 and 4 are built up from supporting arm parts 29 and 30 that can be slid in and out, bridged by a preferably double-acting hydraulic cylinder 31 by means of which the supporting arm parts 30 are slid into or out of the supporting arm parts 29 such that the inner rake wheels of the haying implements 24 connect to the respective outer rake wheels of the haying implements 23. The telescopic supporting arm parts 29 and 30 could in fact also be set manually and secured relative to each other by locking pins.

To raise the haying implements 24 on the supporting arms 3 and 4 some distance above the ground, which may be desired for turning on the headland or reversing, a hydraulic cylinder 32 (Fig. 2) is pivotally provided between the supporting frame 17 and each of the supporting arms 3 and 4. Although this hydraulic cylinder may be double-acting, a single-acting cylinder is preferred here. As it is, the supporting arms 3 and 4 move downwards by their own weight and when they are supported upon the ground via the wheel pairs 20, they can easily follow unevennesses in the ground. To raise the haying implement 23 from the ground for the same reason, the supporting beam 5 can be pressed upwards by the wheel pair 10 by energizing the hydraulic cylinder 11.

Provided on the supporting frame 17 is a control valve block 33, which, when the implement carrier is hitched to the tractor, can on one side be connected to the hydraulic system of tractor, and which can on the other side be connected to the various hydraulic cylinders 11, 16, 28, 31 and 32 of the implement carrier. Via the control valve block 33, these cylinders are controlled from a tractor 8.

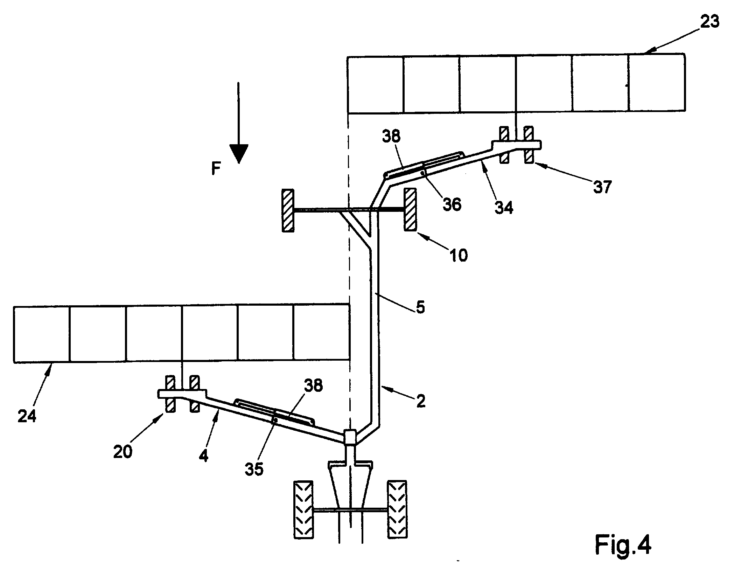

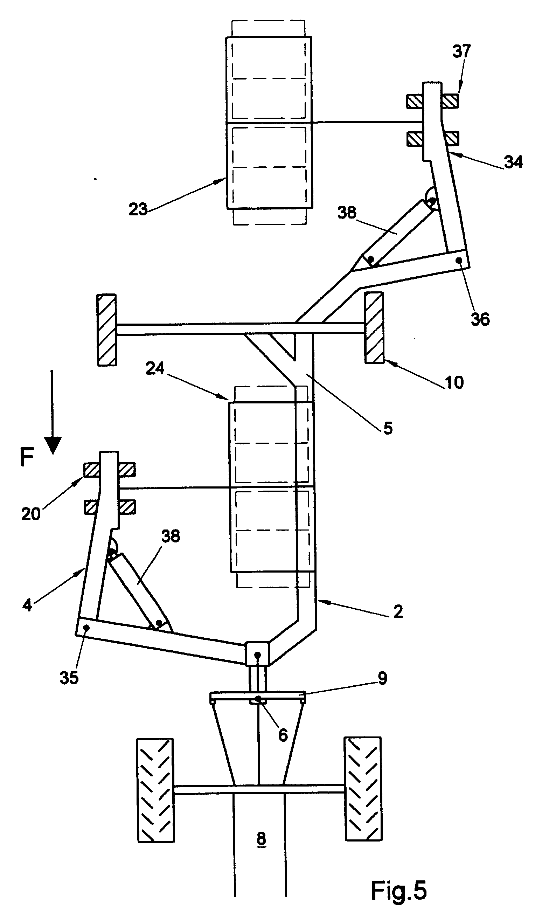

Figs. 4 and 5 schematically show an arrangement of two haying implements 23, 24, each having six rake wheels, which haying implements are hitched to an implement carrier having a pivotable supporting arm 4 and a further supporting arm 34, provided behind the intermediate frame 2 and supported by a wheel pair 37. Like the wheel pair 20, this wheel pair 37, too, comprises swivel wheels. Fig. 4 shows the machine in the working position, while Fig. 5 shows the machine in the transporting position; in the transporting position, the two extreme rake wheels on either side are folded up. In so far as it is possible, the same reference numerals are used in Figs. 4 and 5 as in the exemplary embodiment according to Figs. 1-3. The supporting arms 4 and 34 are positioned at an angle such that as far as its operation is concerned, the inner rake wheel of the haying implement 23 connects to the inner rake wheel of the haying implement 24, in such a manner that for instance to the left and to the right of the center line of the tractor to which the machine is hitched, the same number of rake wheels are operative. This is of course not required, and in particular not so when the haying implements 23 and 24 have different numbers of rake wheels. However, a different setting of these angles is of course possible. When the haying implements have fewer rake wheels than is shown in the drawings, the two angles will be chosen to be smaller, at least if one wishes to have the inner rake wheels of the two haying implements connect to each other, as far as their operation is concerned.

For folding up the machine into the transporting position shown in Fig. 5, the supporting arms 4 and 34 each comprise a hinge 35 and 36 respectively. The two parts of the supporting arms 4 and 34 are bridged by hydraulic cylinders 38. In particular when the hitched agricultural implements in the configuration of the implement carrier according to the invention shown in Fig. 4 have a relatively slight working width, it may be favorable to provide a supporting arm 3 in addition to the supporting arms 4 and 34, as shown in Fig. 1. of course, this supporting arm need not be symmetrically arranged relative to the supporting arm 4 on the other side of the supporting beam 5; such third supporting arm 3 can for instance also be mounted further rearwards on the supporting beam 5.

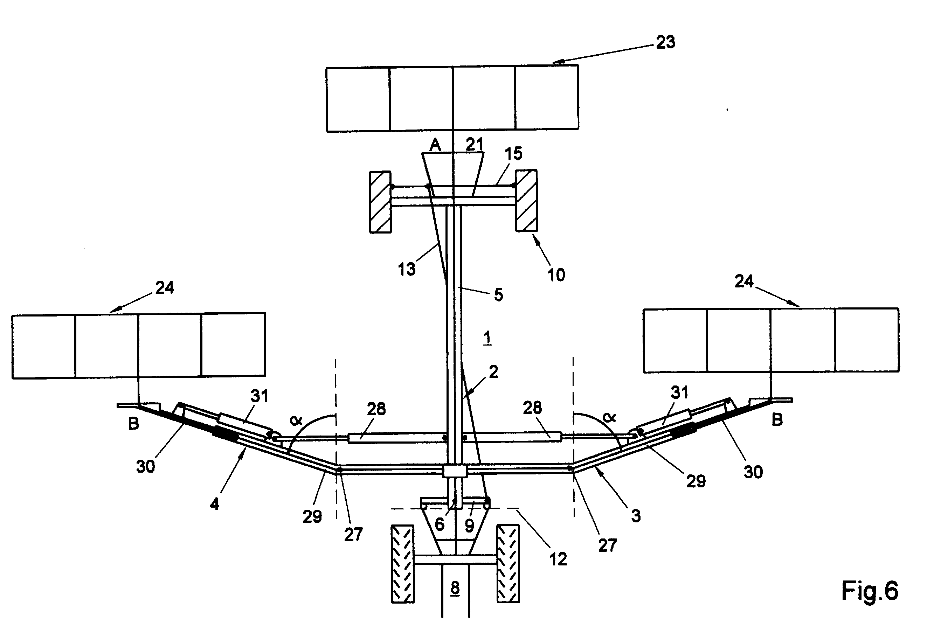

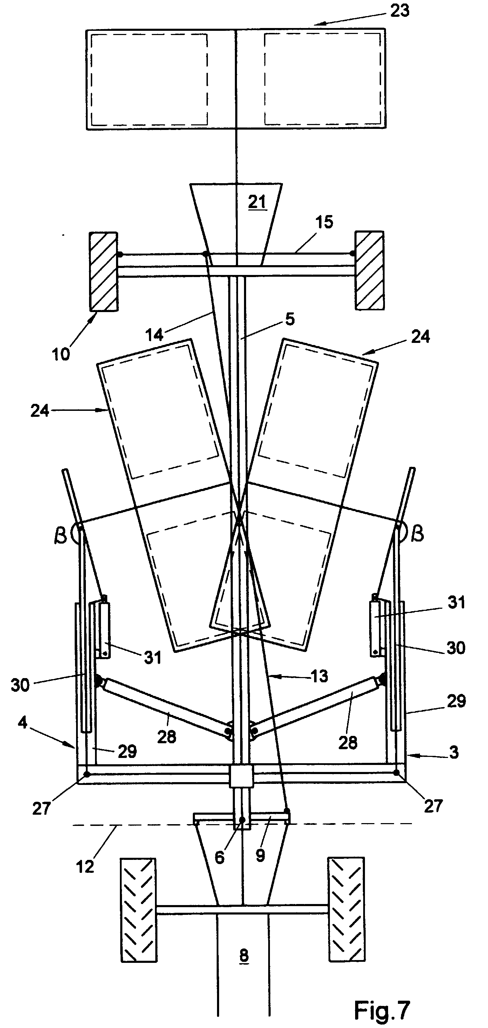

Figs. 6 and 7 schematically show an arrangement of three haying implements 23, 24, all having four rake wheels. Fig. 6 shows the machine in the working position, while Fig. 7 shows the machine in the transporting position. Here, too, the extreme rake wheels have been folded up. In so far as it is possible, the same reference numerals are used in Figs. 6 and 7 as in the exemplary embodiment according to Figs. 1-3. The supporting arms 3 and 4 are positioned at an angle a to cause the outer rake wheels of the haying implement 23 to connect, as far as its operation is concerned, to the inner rake wheels of the haying implements 24. To bring the machine into the transporting position shown in Fig. 7, the supporting arms 3 and 4 are built up from telescopic parts, similarly to the exemplary embodiment of Figs. 1-3. Further, in this configuration, the outer rake wheels of the haying implement 23 can be folded up in a known manner to provide that this haying implement, too, falls within the legally permitted transport width. Here again, setting the machine and folding up the machine from the working position into the transporting position and the other way round can be effected by means of the usual hydraulic cylinders 28 and 31. Further, for folding the machine into the transporting position, the angle β (Fig. 7) which the haying implements 24 adopt relative to the supporting arms 3 and 4 can be adjusted by means of hydraulic cylinder present for that purpose, yet not indicated in the Figures. This for instance enables causing the haying implements to extend parallel to the supporting beam 5 in the transporting position. The setting of the angle β can of course also take place manually or by means of control rods. Although this is not shown in the Figures either, the rake wheels may in the transporting position be supported by the supporting beam 5, so that the full weight thereof does not bear on the pivot points 27.

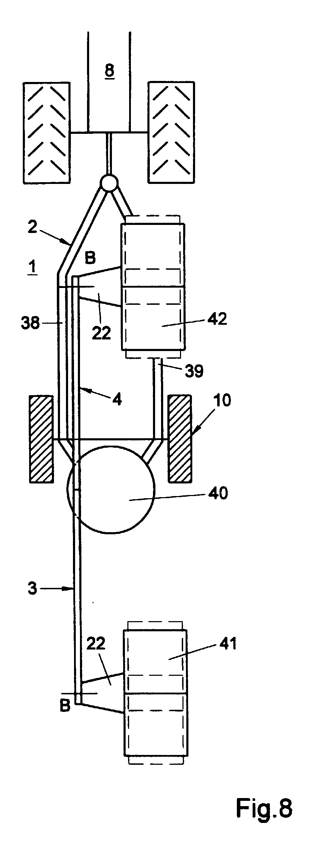

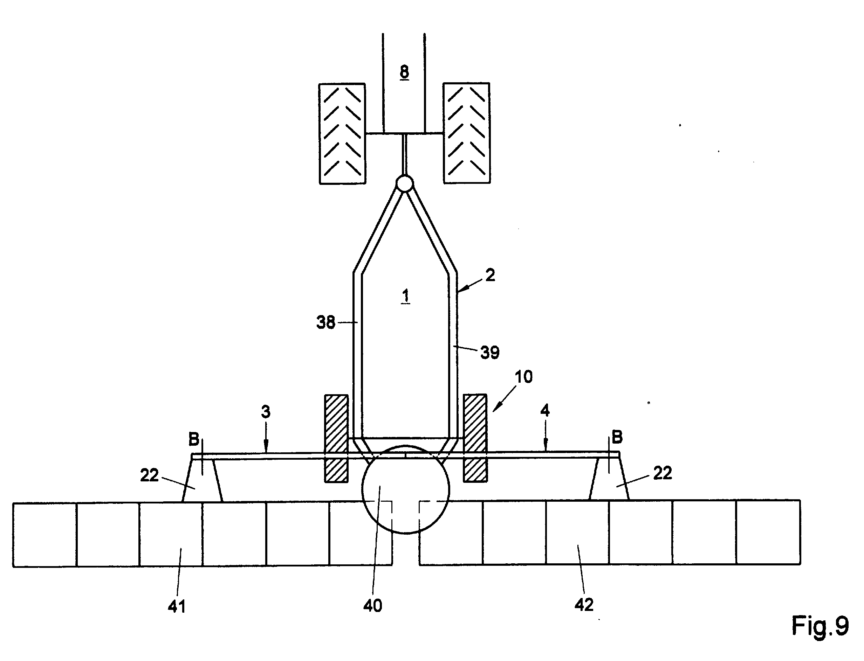

Figs. 8 and 9 show a further exemplary embodiment of the implement carrier according to the invention. The implement carrier pulled by the tractor 8 comprises the frame 1 which, in this exemplary embodiment, is formed by two beams 38, 39 and a ring mount 40 and which is supported by the wheel pair 10. Mounted on the ring mount 40 are the supporting arms 3 and 4; these supporting arms can be slid in and out. Provided on or adjacent the ends of these arms are again sets of hitching points 22, in a configuration identical to that of a three-point hitch on the rear of a tractor, so that implements 41 and 42 to be hitched thereto can be carried in this three-point suspension and lifted from the ground to bring the implements into the transporting position. In the embodiment drawn, the implements 41 and 42 are schematically shown as a haying implement having six rake wheels. In the transporting position, these rake wheels are again folded up and inwards in a manner known per se, as is schematically indicated in Fig. 8. In the transporting position, the ring mount 40 is brought into a position such that the supporting arms 3, 4 extend approximately in the direction of travel of the tractor. Although not shown in the Figures, in this exemplary embodiment, too, a transmission casing may be arranged on the intermediate frame 2, to which the power take-off of the tractor can be connected and from which a drive passes to each of the hitching locations B at the ends of the supporting arms. Through rotation of the ring mount 40, the implements can be moved into any desired working position, for instance into the position shown in Fig. 9, where the supporting arms extend approximately transversely to the direction of travel. Due to the fact that here, too, three-point lifting devices of the type conventional for tractors are mounted on the supporting arms, implements of various types and of various brands can be connected hereto as well.

The invention is by no means limited to the exemplary embodiments described herein, but comprises various modifications hereto, of course in so far as they fall within the protective scope of the following claims. Due to the fact that the supporting arms 3, 4 can be swivelled relative to the supporting beam 5 and that these supporting arms are telescopic and pivotable, and due to the possibility of extending the supporting beam 5 with a further supporting arm 34 supported by the wheel pair 37, agricultural implements other than the haying implements mentioned herein, such as drag harrows, mowers, etc., can be hitched as well.

## Claims

1. An implement carrier for hitching a plurality of agricultural implements (23, 24) behind a tractor (8), said implement carrier having a frame (1) which is supported by wheels and which can be hitched behind a tractor (8), the frame (1) comprising a plurality of sets of hitching points (21, 22) for connecting agricultural implements (23, 24) in the same manner as when they were hitched directly to a tractor (8), and a transmission casing (25) to which the power take-off (26) of the tractor (8) can be connected and from which the drive passes to each of the hitching locations (A and B) on the frame adjacent the respective sets of hitching points (21, 22), to enable from there a coupling to the drive means in the relevant agricultural implements (23, 24).

2. An implement carrier according to claim 1, characterized in that each set of hitching points (21, 22) is formed by three hitching points in a three-point lifting configuration as is known per se for tractors.

3. An implement carrier according to claim 1 or 2, characterized in that one or more hitching points (21, 22) are adjustable relative to the frame (1).

4. An implement carrier according to claim 1, 2 or 3, characterized in that the frame (1) comprises a fixed intermediate frame (2) which is supported by the wheels and can be coupled behind a tractor (8), and at least one supporting arm (3, 4) which is pivotable relative to the intermediate frame (2), both the intermediate frame (2) and the supporting arm (3, 4) comprising a set of hitching points (21, 22) for connecting agricultural implements (23, 24).

5. An implement carrier according to claim 4, characterized in that on either side of the intermediate frame (2) there is provided a supporting arm (3, 4) which is pivotable relative thereto, and that both supporting arms (3, 4) comprise a set of hitching points (22) for connecting agricultural implements (24).

6. An implement carrier according to claim 5, characterized in that the angle (α) at which a supporting arm (3, 4) is provided relative to the direction of travel (F) is settable.

7. An implement carrier according to any one of claims 4-6, characterized in that for each supporting arm (3, 4) a hydraulic cylinder (28) is present for moving a relevant supporting arm (3, 4), with or without an agricultural implement (24) hitched thereto, rearwards relative to the direction of travel (F).

8. An implement carrier according to any one of claims 4-7, characterized in that for each supporting arm (3, 4) a hydraulic cylinder (31) is present for adjusting the length of said supporting arm (3, 4) to determine the working width of the machine, formed by the implement carrier and the agricultural implements (23, 24) hitched thereto, and/or for bringing the machine into the transporting position.

9. An implement carrier according to any one of claims 4-7, characterized in that in each of the supporting arms (3, 4) a hinge is included and that for each supporting arm (3, 4) a hydraulic cylinder is present for bringing the supporting arm (3, 4), with or without an agricultural implement (24) hitched thereto, into the transporting position, utilizing said hinge.

10. An implement carrier according to any one of claims 4-9, characterized in that for each supporting arm (3, 4) a hydraulic cylinder (32) is present for swivelling said supporting arm (3, 4), with or without an agricultural implement (24) hitched thereto, upwards.

11. An implement carrier according to any one of claims 2-10, characterized in that each of the pivotable supporting arms (3, 4) comprises a height-adjustable wheel pair (20), the wheels preferably being freely swivelable, and by means of which the supporting arms (3, 4) can be supported upon the ground.

12. An implement carrier according to claim 11, characterized in that it comprises a supporting frame (17) to which the supporting arms (3, 4) are connected, said supporting frame (17) being connected to the intermediate frame (2) for rotation about a substantially horizontal axis (18) extending transversely to the direction of travel.

13. An implement carrier according to any one of the preceding claims, characterized in that on or adjacent the end of the frame (1) opposite the end of the frame (1) that can be coupled to a tractor (8), a wheel pair (10) is provided whose height is adjustable by a hydraulic cylinder (11), while the frame (1) is rotatable about a substantially horizontal axis (12) formed by the hitching points of the implement carrier on a tractor (8).

14. An implement carrier according to claim 13, characterized in that it comprises a transverse beam (9) which can be coupled to a tractor (8) and to which said frame (1) is connected for pivoting about a substantially vertical axis (6), and a control rod mechanism (13) connected to said transverse beam (9) for controlling the wheels of the wheel pair (10) whereby the supporting beam (5) is supported upon the ground such that they can follow the movement of the tractor (8).

15. An implement carrier according to any one of claims 4-12, characterized in that one or more hydraulic cylinders (11, 16, 28, 31 and 32) are double-acting.

16. An implement carrier according to any one of claims 4-12, characterized in that it comprises a control valve block (33) for operating the hydraulic cylinders (11, 16, 28, 31 and 32), said control valve block (33) being connected to the hydraulic system of the tractor and being manually or electrically operable from the tractor (8).

17. An implement carrier according to any one of claims 1-3, characterized in that the frame (1) comprises a fixed intermediate frame (2) which is supported by wheels and can be hitched behind the tractor (8), on which intermediate frame a ring mount (40) is provided having supporting arms (3, 4) secured thereto, the supporting arms (3, 4) comprising a set of hitching points (22) for connecting agricultural implements.
